# EUROPEAN PATENT APPLICATION

(11) **EP 4 773 347 A1**
(43) Date of publication of application: **08.07.2026**
(21) Application number: 24860523.0
(22) Date of filing: 20.08.2024
(51) Int. Cl.: H01M 10/655, H01M 10/613, H01M 50/242, C08L 83/04, C08K 3/22, C08G 77/12, C08G 77/20

(54) **GAP FILLER COMPOSITION AND BATTERY PACK**

(30) Priority: 01.09.2023 KR 20230116177
(71) Applicant: Dongwoo Fine-Chem Co., Ltd., Iksan-si, Jeonbuk-do 54631 (KR)
(72) Inventor: KIM, Hyun Woo, Iksan-si, Jeonbuk-do 54631 (KR); SHIN, Woo Jun, Iksan-si, Jeonbuk-do 54631 (KR); SIM, Min Kyu, Iksan-si, Jeonbuk-do 54631 (KR)
(74) Representative: dompatent
(86) International application number: PCT/KR2024/096034
(87) International publication number: WO 2025/048607

(57) **Abstract**

A gap filler composition according to embodiments of the present invention comprises: a siloxane-based resin; a filler including thermally conductive inorganic particles and hollow particles; a catalyst; and an amino-silicone-based dispersant. A gap filler composition is provided that maintains thermal conductivity by utilizing an amino-silicone-based dispersant and hollow particles and has low specific gravity and improved viscosity stability. A battery pack utilizing the gap filler composition is provided.

## Description

### [TECHNICAL FIELD]

The present invention relates to a gap filler composition and a battery pack. More particularly, the present invention relates to a gap filler composition including a siloxane-based resin and a battery pack including a gap filler formed using the same.

### [BACKGROUND ART]

A secondary battery is a battery which may be repeatedly charged and discharged, and is widely applied as a power source for portable electronic devices such as a mobile phone, a laptop PC, or the like. For example, the lithium secondary battery has a high operating voltage, an energy density and rate properties, and has been used recently as a power source for electric vehicle.

For example, a battery cell is defined by a lithium secondary battery, and a plurality of the battery cells are assembled to form a battery module. The battery module may be assembled to form a high-capacity/high-power battery pack applicable to the electric vehicle.

To apply the battery pack to a vehicle such as the electric vehicle, the battery pack may be seated on a battery support plate, and the battery pack may be fixed using a gap filler composition.

The process of applying the gap filler composition may be included in an entire production platform of the electric vehicle. Thus, a gap filler composition that may be cured within a predetermined period to provide desired physical properties may be required to maintain efficiency/reliability.

To dissipate heat generated by repeated charging and discharging of the battery pack, design of a composition capable of forming a gap filler having a low weight and/or a specific gravity while having improved thermal conductivity, appropriate absorption and/or elasticity against external impact is needed.

For example, Korean Registered Patent Publication No. 10-2402503 discloses a battery pack structure including a battery module and a gap filler.

### DETAILED DECRIPTIONS OF THE INVENTION

### [Technical Objective]

An object of the present invention is to provide a gap filler composition providing improved thermal properties and mechanical properties.

An objective of the present invention is to provide a battery pack including a gap filler formed of the gap filler composition.

### [Technical Means]

1. A gap filler composition, including: a siloxane-based resin; a filler comprising thermally conductive inorganic particles and hollow particles; a catalyst; and an amino-silicon-based dispersant.
2. The gap filler composition of the above 1, wherein a content of the amino-silicon-based dispersant is in a range from 0.1 wt% to 3 wt% based on a total weight of the composition.
3. The gap filler composition of the above 1, wherein the thermally conductive inorganic particles include aluminum hydroxide particles.
4. The gap filler composition of the above 3, wherein the aluminum hydroxide particles are not surface-treated with an alkyl group or an alkylsilane group.
5. The gap filler composition of the above 3, wherein a content of the thermally conductive inorganic particles is in a range from 75 wt% to 95 wt% based on a total weight of the composition.
6. The gap filler composition of the above 1, wherein the hollow particles include hollow silica particles.
7. The gap filler composition of the above 6, wherein a density of the hollow particles is in a range from 0.1 g/cc to 0.8 g/cc.
8. The gap filler composition of the above 1, wherein a content of the hollow particles is in a range from 0.1 wt% to 5 wt% based on a total weight of the composition.
9. The gap filler composition of the above 1, wherein the siloxane-based resin includes a first siloxane-based resin that includes an unsaturated terminal group, and a second siloxane-based resin that includes a saturated terminal group.
10. The gap filler composition of the above 9, wherein the first siloxane-based resin includes a siloxane-based resin having vinyl groups at both terminal ends, and the second siloxane-based resin includes a siloxane-based resin having hydrogen atoms bonded to silicon atoms at both terminal ends.
11. The gap filler composition of the above 10, further including a cross-linking agent in which methyl groups are bonded to silicon atoms at both terminals ends.
12. The gap filler composition of the above 9, wherein a content of the siloxane-based resin is in a range from 2 wt% to 23 wt% based on a total weight of the composition.
13. The gap filler composition of the above 1, wherein the gap filler composition has a specific gravity of less than 3.
14. The gap filler composition of the above 1, wherein the gap filler composition has a specific gravity in a range from 1.5 to 1.9.
15. A battery pack, including: a plurality of battery modules; and a support plate; and a gap filler formed between the battery modules and the support plate using the gap filler composition according the above-described embodiments.

### [Effects of the Invention]

According to exemplary embodiments of the present invention, a gap filler composition may include hollow particles as a filler. Further, the filler may include thermally conductive inorganic particles, and the thermally conductive inorganic particles may include aluminum hydroxide particles. In some embodiments, non-surface treated aluminum hydroxide particles may be used.

The hollow particles may reduce a specific gravity of the gap filler composition, and the thermally conductive inorganic particles may further reduce the specific gravity of the gap filler composition while maintaining a thermal conductivity.

Accordingly, the gap filler composition may be applied to a vehicle battery pack to reduce a weight of the battery pack while promoting a rapid heat dissipation even when a temperature increases due to repetition of charging/discharging of the battery pack.

In example embodiments, the gap filler composition may include an amino-silicon-based dispersant. The amino-silicon-based dispersant may increase dispersibility between the filler and a siloxane-based resin, thereby enhancing storage stability of the composition.

### [Brief Descriptions of the Drawings]

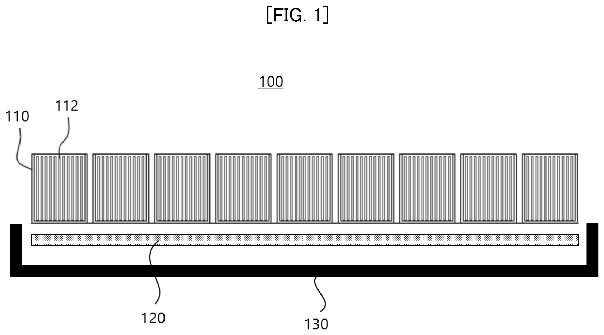

FIG. 1 is a schematic perspective view illustrating a battery pack in accordance with example embodiments.

### [Mode for Practicing the Invention]

According to embodiments of the present invention, a gap filler composition including a siloxane-based resin, a catalyst and a filler, and having improved curing properties is provided. Additionally, according to embodiments of the present invention, a battery pack using the gap filler composition is provided.

### <Gap filler composition>

A gap filler composition according to embodiments may include a siloxane-based resin, a catalyst and a filler.

The siloxane-based resin may be provided as a base component providing curability of the gap filler composition. According to embodiments, the siloxane-based resin may include a first siloxane-based resin and a second siloxane-based resin.

The first siloxane-based resin may be a siloxane-based resin containing a crosslinkable end group. According to embodiments, the first siloxane-based resin may be a siloxane-based resin containing an unsaturated end group (e.g., a vinyl group) at both ends of a molecule.

For example, the first siloxane-based resin may include a compound represented by Chemical Formula 1 below.

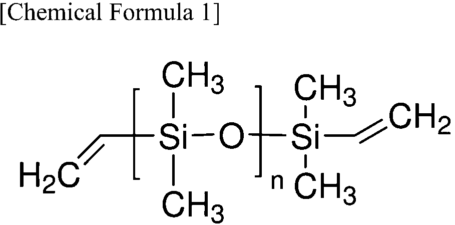

In some embodiments, a viscosity of the first siloxane-based resin at 25°C may be in a range from 50 cps to 150,000 cps, preferably from 70 cps to 1,500 cps, from 100 cps to 1,500 cps, from 200 cps to 1,500 cps, more preferably from 300 cps to 1,200 cps.

Within this viscosity range, curing properties and curing speed described below may be more easily achieved, and appropriate application properties and flowability of the gap filler composition may be achieved.

In some embodiments, a weight average molecular weight of the first siloxane-based resin may be adjusted in consideration of the above-described viscosity range. For example, the weight average molecular weight of the first siloxane-based resin may be in a range from 1,500 to 50,000, from 10,000 to 50,000, preferably from 10,000 to 30,000, more preferably from 10,000 to 25,000.

In Chemical Formula 1, n may be adjusted in consideration of the viscosity range. For example, n may be a natural number in a range from 40 to 800, from 80 to 800, from 100 to 800, from 130 to 700, or from 150 to 700.

A content of the first siloxane-based resin based on a total weight of the gap filler composition (e.g., a solid content) may be in a range from 1.5 wt% to 13 wt%. In an embodiment, the content of the first siloxane-based resin may be in a range from 5 wt% to 13 wt%, preferably from 7 wt% to 12 wt%, or from 8 wt% to 10 wt%. In the above content range, a gap filler having appropriate hardness and elasticity may be effectively formed.

The second siloxane-based resin may have a different structure from that of the first siloxane-based resin.

The second siloxane-based resin may be included as a chain extender or a chain regulator in the gap filler composition, so that overall viscosity, flowability, cross-linking properties, etc., of the composition may be controlled.

In example embodiments, the second siloxane-based resin may be a siloxane-based resin having saturated groups (e.g., hydrogen atoms) bonded to silicon atoms at both ends.

For example, the second siloxane-based resin may include a compound represented by Chemical Formula 2 below.

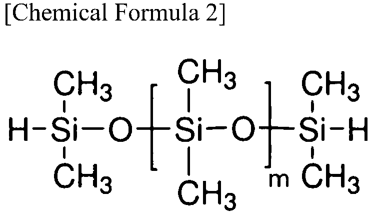

In some embodiments, a viscosity of the second siloxane-based resin at 25°C may be in a range from 10 cps to 1,500 cps, preferably from 100 cps to 1,500 cps, from 200 cps to 1,500 cps, more preferably from 300 cps to 1,200 cps.

A weight-average molecular weight of the second siloxane-based resin may be adjusted depending on the viscosity range. For example, the weight-average molecular weight of the second siloxane-based resin may be in a range from 500 to 50,000, from 10,000 to 50,000, preferably from 10,000 to 30,000, more preferably from 10,000 to 25,000. In the above molecular weight and viscosity ranges, the curing properties and curing speed described below may be more easily achieved, and appropriate application properties and flowability of the gap filler composition may be obtained.

In Chemical Formula 2, m may be adjusted in consideration of the above-described molecular weight and viscosity ranges described above. For example, m may be a natural number in a range from 10 to 700, from 20 to 700, from 30 to 700, from 50 to 700, from 100 to 700, or from 130 to 700.

A content of the second siloxane-based resin based on the total weight of the gap filler composition (e.g., the solid content) may be in a range from 0.5 wt% to 10 wt%. In an embodiment, the content of the second siloxane-based resin may be in a range from 2 wt% to 10 wt%, preferably from 2 wt% to 7 wt%, and more preferably from 2 wt% to 5 wt%. In the above content range, the gap filler having appropriate hardness and elasticity may be effectively formed.

In example embodiments, a content of the siloxane-based resin based on the total weight (e.g., the solid content) of the gap filler composition may be in a range from 2 wt% to 23 wt%. In an embodiment, the content of the siloxane-based resin may be in a range from 7 wt% to 23 wt%, preferably from 7 wt% to 20 wt%, more preferably from 10 wt% to 15 wt%, or from 10 wt% to 14 wt%.

In some embodiments, the gap filler composition may further include a cross-linking agent. The cross-linking agent may be a siloxane-based resin having a relatively low viscosity and having methyl groups bonded to silicon atoms at both terminal ends. For example, the cross-linking agent may include a compound represented by Chemical Formula 3.

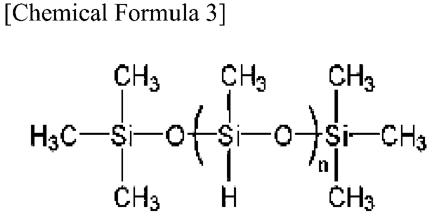

In an embodiment, a viscosity of the cross-linking agent may be less than that of the second siloxane-based resin. In an embodiment, the viscosity of the cross-linking agent may be less than 100 cps at 25°C, and n in Chemical Formula 3 may be adjusted in consideration of the viscosity range.

The cross-linking agent may be included in a cross-linking composition described below. A content of the cross-linking agent may be in a range from 0.1 wt% to 0.5 wt% based on the total weight of the gap filler composition.

The catalyst may be used as a modifier to promote cross-linking and/or interaction of the siloxane-based resin of the gap filler composition, so that the curing characteristics and curing speed described below may be achieved.

In some embodiments, the catalyst may include a compound or a complex of Pt(II), Pt(IV) and/or Pt(0). For example, the catalyst may include chloroplatinic acid, an Ashby's catalyst, or a Karstedt catalyst.

In example embodiments, the catalyst may comprise an organic-inorganic hybrid catalyst containing platinum and silicon.

The catalyst may contain a Pt atom and a Si₂O group (-Si-O-Si-) in a molecule. For example, silicon (Si) atoms of the Si₂O group may be bonded to a vinyl group, and the Pt atom may be coordinated or captured by the vinyl group.

In example embodiments, a weight ratio of platinum (Pt) relative to of a silicon atom (Si) and an oxygen atom (O) in the catalyst may be in a range from 1.2 to 2.0, preferably from 1.2 to 1.5, more preferably from 1.25 to 1.45.

Proper activity of the catalyst through the Pt atom may be maintained by using the catalyst in the weight ratio range. Thus, curing properties and curing rate of the gap filler composition as described below may be easily implemented using the catalyst.

For example, the catalyst may include a unit represented by Chemical Formula 4 below in the molecule.

[Chemical Formula 4] Pt · [(CH₂=CH(CH₃)₂Si)O]

In some embodiments, a content of the catalyst based on the total weight of the composition may be in a range from 0.02 wt% to 0.05 wt%. Within the above range, an appropriate curing rate may be implemented while preventing an excessive increase in hardness/elasticity of the gap filler.

The filler may be included as a component that may increase a thermal conductivity of the gap filler to improve heat dissipation properties of a battery pack.

According to embodiments, the filler may include a thermally conductive inorganic particle. Examples of the thermally conductive inorganic particle may include aluminum hydroxide (Al(OH)₃), magnesium hydroxide (Mg(OH)₂), calcium hydroxide (Ca(OH)₂), hydromagnesite (Mg₅(CO₃)₄(OH)₂·4H₂O), magnesia, alumina, aluminum nitride (AlN), boron nitride (BN), silicon nitride, SiC, ZnO, BeO, or the like.

In example embodiments, the filler may include aluminum hydroxide (Al(OH)₃) particles. The aluminum hydroxide particles may have a relatively low specific gravity compared to that of alumina particles, and may lower an overall specific gravity of the gap filler composition and may improve filling properties and flowability.

In some embodiments, the gap filler composition may not include alumina particles. In an embodiment, the thermally conductive inorganic particles may substantially consist of the aluminum hydroxide particles. For example, the thermally conductive inorganic particles may not include the alumina particles.

In some embodiments, the thermally conductive inorganic particles or aluminum hydroxide particles may be non-surface treated particles. For example, the thermally conductive inorganic particles or the aluminum hydroxide particles may be bare particles that are not surface-treated with an alkyl group or an alkylsilane group. Thus, the specific gravity reduction effect from the use of the aluminum hydroxide particles may be more effectively implemented.

The thermally conductive inorganic particles may be included in the largest amount (by weight%) of the gap filler composition. Thus, the thermal conductivity properties of the gap filler composition may be sufficiently increased.

A content of the thermally conductive inorganic particles may be in a range from 75 wt% to 95 wt% based on the total weight of the composition. In some embodiments, the content of the thermally conductive inorganic particles may be in a range from 75 wt% to 90 wt%, preferably 80 wt% to 90 wt%, more preferably 85 wt% to 90 wt%.

In example embodiments, the filler may further include hollow particles. The hollow particles may be included to further reduce the specific gravity of the gap filler composition while maintaining or increasing a thermal conductivity.

Examples of the hollow particles include hollow organic particles such as acrylic particles, e.g., PMMA (poly(methylmethacrylate)) particles, epoxy particles, nylon particles, styrene particles, styrene/vinyl copolymer particles, etc.; and hollow inorganic particles such as silica particles, indium oxide particles, tin oxide particles, zirconium oxide particles, zinc oxide particles, titania particles, etc.

In a preferable embodiment, the hollow inorganic particles may be used as the hollow particles, e.g., the hollow silica particles may be used.

In an embodiment, the hollow particles having a density in a range of 0.05 g/cc to 0.8 g/cc may be used. In the above range, the specific gravity reduction effect may be sufficiently achieved by employing the hollow particles. Preferably, the hollow particles may have a density in a range from 0.1 g/cc to 0.8 g/cc, from 0.1 g/cc to 0.5 g/cc, more preferably from 0.2 g/cc to 0.4 g/cc.

In an embodiment, the hollow particles may have an isostatic crush strength of 100 psi to 50,000 psi, preferably from 2,000 psi to 50,000 psi. Accordingly, strength with respect to an external impact of the gap filler formed using the gap filler composition may be enhanced.

In some embodiments, a content of the hollow particles may be in a range from 0.1 wt% to 5 wt% based on the total weight of the composition. In the above range, the specific gravity of the gap filler composition may be effectively reduced without excessively lowering the thermal conductivity of the composition.

Preferably, the content of the hollow particles may be in a range from 0.5 to 4 wt%, more preferably from 0.5 to 3 wt%, or from 1 to 3 wt%, based on the total weight of the composition.

The gap filler composition according to example embodiments may further include an amino-silicon-based dispersant.

In some embodiments, the amino-silicon-based dispersant may include an amino silicone oil containing a siloxane unit and an amino group. For example, the amino-silicon-based dispersant may include a siloxane unit and an amino-containing group.

For example, the amino-silicon-based dispersant may include a siloxane unit represented by General Formula 1 below and an amino-containing group represented by General Formula 2 below. The amino-containing group may be bonded to a silicon atom.

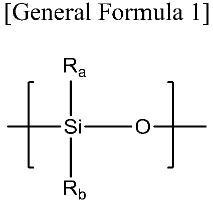

In General Formula 1, Rₐ and R_{b} may each be hydrogen, a C₁-C₅ alkyl group, or a group represented by General Formula 2.

[General Formula 2] -ALK₁-NH-ALK₂-NH-R_{c}

In General Formula 1, R_{c} may be hydrogen or a C₁-C₅ alkyl group. ALK₁ and ALK₂ may each independently be a C₁-C₆ alkylene group.

For example, the siloxane unit represented by General Formula 1 may be included as a repeating unit of the amino-silicon-based dispersant. The amino-containing group represented by General Formula 2 may be bonded as Rₐ or R_{b} to at least one of the repeating siloxane units.

Sufficient dispersibility may be achieved by the amino-silicon-based dispersant even when non-surface-treated thermally conductive inorganic particles are used. Thus, an overall uniform thermal conductivity may be achieved while reducing the specific gravity of the composition.

Additionally, the dispersant containing the siloxane units may stabilize the filler at an interface between the siloxane-based resin and the filler. Thus, agglomeration of the filler may be prevented, the viscosity of the composition can be maintained stably, and the flowability may be improved.

In some embodiments, a dispersant containing a hydroxyl group or an epoxy group may not be used as the dispersant. Thus, side reactions between the filler and the siloxane-based resin due to the hydroxyl group or the epoxy group may be prevented, and dispersibility and thermal conductive uniformity of the composition may be improved.

In some embodiments, a content of the amino-silicon-based dispersant may be in a range from 0.1 wt% to 3 wt% based on the total weight of the composition. In an embodiment, a content of the amino-silicon-based dispersant may be in a range from 0.1 wt% to 0.5 wt%, preferably from 0.2 wt% to 0.4 wt%. In the above range, the dispersibility of the aluminum hydroxide particles may be improved and an increase of the specific gravity of the composition may be prevented.

In some embodiments, an amine value defined as an amount of a 0.1 N HCl titrant required to neutralize 10 g of the amino-silicon-based dispersant may be in a range from 1 mgKOH/g to 80 mgKOH/g, preferably from 10 mgKOH/g to 60 mgKOH/g, more preferably from 20 mgKOH/g to 50 mgKOH/g. In the above range, the filler stabilization effect as described above may be effectively implemented.

In some embodiments, the gap filler composition may further include an additive for enhancing conductivity and curability of the composition within a range that does not hinder the actions of the siloxane-based resin, the catalyst, and the filler. For example, the additive may include a flame retardant, a surfactant, a silane coupling agent, a colorant (e.g., a pigment), an anti-oxidant, a plasticizer, or the like. The additive may be included in the composition as a remainder or an extra amount, excluding the siloxane-based resin, the catalyst, and the filler described above.

For example, an organic flame retardant such as melamine cyanurate, an inorganic flame retardant such as magnesium hydroxide, etc., may be used as the flame retardant. In an embodiment, a liquid-type flame retardant material (such as triethyl phosphate (TEP) or tris(1,3-chloro-2-propyl)phosphate (TCPP)) may also be used.

For example, polyethylene glycol, polypropylene glycol, oleic acid ethoxylate, alkylphenol ethoxylate, a copolymer of ethylene oxide and propylene oxide, a silicon-based polymer, etc., may be used as the surfactant.

For example, examples of the silane coupling agent include γ-glycidoxypropyltrimethoxysilane, γ-glycidoxypropylmethyldiethoxysilane, γ-glycidoxypropyltriethoxysilane, 3-mercaptopropyl trimethoxysilane, vinyltrimethoxysilane, vinyltriethoxysilane, γ-methacryloxypropyltrimethoxysilane, γ-methacryloxypropyltriethoxysilane, γ-aminopropyltrimethoxysilane, γ-aminopropyltriethoxysilane, 3-isocyanatepropyltriethoxysilane, γ-acetoacetatepropyltrimethoxysilane, etc.

For example, a phenol-based compound, a quinone-based compound, an amine-based compound, a phosphorus-based compound, a phosphite-based compound, a thioether-based compound, etc., may be used as the anti-oxidant.

For example, tetraethylene glycol monobutyl ether (3,6,9,12-tetraoxahexadecanol), triethylene glycol monobutyl ether (3,6,9-trioxatridecanol), diethylene glycol monobutyl ether (2-(2-butoxyethoxy)ethanol), propylene glycol monobutyl ether, ethylene glycol monobutyl ether, propylene glycol monomethyl ether (1-methoxy-2-propanol), propylene glycol monomethyl ether acetate, polyethylene glycol, glycerin, etc., may be used as the plasticizer.

In example embodiments, the specific gravity of the gap filler composition may be less than 3, preferably 2.5 or less. In some embodiments, the specific gravity of the gap filler composition may be in a range from 1.5 to 2, more preferably 1.5 to 1.9.

The specific gravity is a numerical value measured based on a density of water at 4°C and 1 atm.

In the above specific gravity range, the gap filler that providing desired heat dissipation characteristics and enhanced mechanical stability may be obtained without increasing a weight of the battery pack.

The gap filler composition may be prepared as a two-component composition. For example, the gap filler composition may be prepared by separately preparing a main composition and a cross-linking composition, and then mixing the main composition and the cross-linking composition.

According to embodiments of the present invention, the above-described first siloxane resin may be commonly included in the main composition and the cross-linking composition.

In example embodiments, the main composition may include the first siloxane-based resin, the catalyst, and the filler. The cross-linking composition may include the second siloxane-based resin, the cross-linking agent, and the filler.

For example, the second siloxane-based resin may be mixed in a state in which the catalyst is distributed with the first siloxane-based resin in the main composition. Thus, the second siloxane-based resin may be introduced in a state in which cross-linking points are distributed in the main composition, so that curing efficiency may be improved.

In some embodiments, the first siloxane-based resin may also be included in the cross-linking composition. A weight of the first siloxane-based resin included in the main composition may be greater than a weight of the first siloxane-based resin included in the cross-linking composition.

The filler may be divided and included in the main composition and the cross-linking composition. In an embodiment, a ratio of an amount of the filler contained in the main composition to an amount of the filler contained in the cross-linking composition may be in a range from 0.4 to 0.6, preferably from 0.45 to 0.55. Within the ratio range, heat conduction efficiency may be improved by uniform distribution of the filler.

As described above, the filler may include the thermally conductive inorganic particles and the hollow particles, and the amino-silicon-based dispersant may improve dispersibility of the non-surface-treated particles. The amino-silicon-based dispersant may also be separately included in the main composition and the cross-linking composition.

### <Battery Pack>

FIG. 1 is a schematic perspective view illustrating a battery pack in accordance with example embodiments.

Referring to FIG. 1, a battery pack 100 may include a battery module 110 and a support plate 130, and may include a gap filler 120 formed on the battery module 110 and the support plate 130.

The battery module 110 may include a plurality of battery cells 112. Each of the battery cells 112 may include an electrode assembly including a cathode and an anode alternately and repeatedly stacked. The cathode and the anode may be alternately and repeatedly stacked with a separator interposed therebetween. The cathode may include a lithium metal oxide as a cathode active material, and the battery cell 112 may be provided as a lithium secondary battery.

Each of the plurality of battery cells 112 may include a cathode lead and an anode lead, and the cathode leads and the anode leads may be merged with each other through a busbar to define the battery module 110.

The battery module 110 may be fixed on the support plate 130. The gap filler composition according to the above-described embodiments may be applied and cured between the battery module 110 and the support plate 130 to form the gap filler 120.

The battery module 110 may be stably fixed on the support plate 130 by the gap filler 120. As described above, the gap filler 120 may have stable curing properties and improved thermal conduction properties.

In example embodiments, the gap filler composition may have a low specific gravity and maintain a target hardness range within a predetermined time range. Thus, stable hardness properties may be maintained without increasing a weight of the battery pack or deteriorating overall efficiency of an electric vehicle process.

Thus, the battery module 110 may have impact resistance and heat resistance for protecting the battery module 110 even under high temperature conditions, and may provide sufficient heat dissipation properties.

The gap filler 120 may be provided as a thermal conductive layer. For example, a thermal conductivity of the gap filler 120 may be about 1.5 W/mK or more. In an embodiment, the thermal conductivity of the gap filler 120 may be in a range from 1.5 W/mK to 4 W/mK, from 1.5 W/mK to 3.5 W/mK, or from 1.5 W/mK to 3 W/mK.

In the above range, sufficient heat dissipation properties may be achieved without excessively increasing the specific gravity of the gap filler or the gap filler composition.

For example, the thermal conductivity may be measured according to an ISO 227-2 standard.

In example embodiments, a height of the gap filler 120 on which the battery module 110 is seated may be from 5.4 mm to 5.8 mm, preferably from 5.4 mm to 5.7 mm. In the above range, sufficient support stability for the battery module 110 may be provided, and sufficient heat conduction properties may be implemented. Further, a gap generation between the battery module 110 and the gap filler 120 due to an excessive hardening may be prevented.

Hereinafter, experimental examples including specific examples and comparative examples are presented to enhance the understanding of the present invention, but this only exemplifies the present invention and does not limit the scope of the attached patent claims, and it is clear to those skilled in the art that various changes and modifications to embodiments can be made within the scope of the present invention and technical ideas, and it is obvious that these modifications and modifications are included in the range of to the attached patent claims.

### Examples and Comparative Examples

Gap filler compositions having components and contents (parts by weight) shown in Table 1 were prepared.

Specifically, a main composition included a first siloxane-based resin (a vinyl-terminated siloxane resin) and a catalyst, while a cross-linking composition included a first siloxane-based resin (a vinyl-terminated siloxane resin) and a second siloxane-based resin (a hydrogen-terminated siloxane resin). The first siloxane-based resin was divided into the main composition and the cross-linking composition in a weight ratio of about 2:1. The cross-linking composition further included a cross-linking agent having a hydrogen-terminated siloxane resin structure.

Thermal conductive inorganic particles, an amino-silicon-based dispersant and hollow particles were each divided into the main composition and the cross-linking composition in a weight ratio of 1:1.

Meanwhile, in Example 6, alumina particles having an average particle diameter (D50) of about 60 µm and being surface-treated with an alkylsilane agent (hexyltrimethoxysilane) were used instead of aluminum hydroxide particles.

In each of the main composition and the cross-linking composition, the components of Table 1 were put into a paste mixer, mixed and stirred at 600 rpm of revolution/500 rpm of rotation for 3 minutes, and then defoamed for 10 minutes at 1000 rpm of revolution/100 rpm of rotation in a vacuum state.

**[Table 1]**

| | first siloxane-based resin (A-1) | second siloxane-based resin (B-1) | cross-linking agent (C-1) | dispersant | | thermally conductive inorganic particles (F-1) | hollow particles (G-1) | catalyst (H-1) |
|---|---|---|---|---|---|---|---|---|
| | | | | D-1 | D-2 | | | |
| Example 1 | 11.59 | 5.33 | 0.5 | 0.24 | 0.00 | 81 | 1.30 | 0.04 |
| Example 2 | 8.38 | 3.12 | 0.6 | 0.24 | 0.00 | 85 | 2.60 | 0.04 |
| Example 3 | 6.28 | 0.72 | 0.30 | 0.06 | 0.00 | 90 | 2.60 | 0.04 |
| Example 4 | 9.50 | 3.65 | 0.30 | 0.18 | 0.00 | 85 | 1.30 | 0.07 |
| Example 5 | 8.88 | 4.12 | 0.30 | 0.36 | 0.00 | 85 | 1.30 | 0.04 |
| Example 6 | 9.76 | 3.44 | 0.22 | 0.24 | 0.00 | 85 (F-2) | 1.30 | 0.04 |
| Example 7 | 9.76 | 3.44 | 0.22 | 0.24 | 0.00 | 85.90 | 0.40 | 0.04 |
| Example 8 | 9.76 | 3.44 | 0.22 | 0.24 | 0.00 | 82.80 | 3.50 | 0.04 |
| Example 9 | 2.00 | 0.50 | 0.10 | 0.36 | 0.00 | 95 | 2.00 | 0.04 |
| Comparative Example 1 | 8.82 | 2.90 | 0.26 | 0.00 | 0.26 | 86.20 | 1.50 | 0.06 |
| Comparative Example 2 | 9.92 | 4.00 | 0.80 | 0.24 | 0.00 | 85 | 0.00 | 0.04 |
| Comparative Example 3 | 8.81 | 3.25 | 0.30 | 0.00 | 0.00 | 85 | 2.60 | 0.04 |
| Comparative Example 4 | 8.12 | 3.64 | 0.30 | 0.00 | 0.30 | 85 | 2.60 | 0.04 |

Specific components shown in Table 1 are as follows.

### A-1) First siloxane resin

polydimethylsiloxane resin having vinyl groups at both ends and a viscosity of 270 cps (see Chemical Formula 1)

### B-1) Second siloxane resin

polydimethylsiloxane resin hydrogen-treated at both ends and having a viscosity of 500 cps (see Chemical Formula 2)

### C-1) Cross-linking agent

polydimethylsiloxane resin hydrogen-treated at both ends and having a viscosity of 65 cps (see Chemical Formula 3)

### D-1) Amino-silicon-based dispersant (see General Formulae 1 and 2): amine value of 36 mgKOH/g

### D-2) Hydroxyl group-containing silicon-based dispersant (BYK 1799)

### F-1) Thermally conductive inorganic particles

aluminum hydroxide particles (D50: 5 µm)

### F-2) Thermally conductive inorganic particles

alumina particles (D50: 60 µm)

### G-1) Hollow silica particles

density: 0.35 g/cc, Isostatic crush strength: 2,000 psi

### H-1) Catalyst

Catalyst: Pt/Si₂O₃ combined catalyst (Pt/(Si+O) weight ratio: 1.35)

### Experimental Example

### (1) Measurement of specific gravity

The main compositions and cross-linking compositions of Examples and Comparative Examples were mixed in a mass ratio of 1:1 using a two-component cartridge to prepare gap filler compositions. A specific gravity of the gap filler composition was measured according to Test Method A of ASTM D792.

Specifically, a weight of each compositions and a weight of each composition in water were measured according to the above standard, and the specific gravity was calculated from a difference in the measured weights.

### (2) Measurement of thermal conductivity

The main compositions and cross-linking compositions of Examples and Comparative Examples were mixed in a mass ratio of 1:1 using a two-component cartridge and cured to form a resin layer.

A thermal conductivity of the resin layer was measured using a hot disk measuring device according to ISO 22007-2. Specifically, the resin layer of 20 mm in length and width and 6.0 mm in thickness was formed, total three measurements were performed, and an average value was calculated.

### (3) Measurement of viscosity

The main compositions and cross-linking compositions of Examples and Comparative Examples were mixed in a mass ratio of 1:1 using a two-component cartridge to prepare gap filler compositions. A time-dependent viscosity of the gap filler composition was measured using an Advanced Rheometric Expansion System (Brookfield, DV2T Rheometer) (Measurement conditions: 20 rpm/25°C, Gap 5 mm).

The evaluation results are shown in Table 2 below.

**[Table 2]**

| | specific gravity (g/cc) | thermal conductivity (W/mK) | viscosity (mPa·s) | | | | |
|---|---|---|---|---|---|---|---|
| | | | preparation dav | after 1 day | after 2 days | after 3 days | after 4 days |
| Example 1 | 1.78 | 1.70 | 285 | 301 | 326 | 330 | 329 |
| Example 2 | 1.77 | 2.10 | 631 | 663 | 673 | 675 | 680 |
| Example 3 | 1.87 | 2.30 | 793 | 948 | 1,100 | 1,250 | 1,380 |
| Example 4 | 1.85 | 2.20 | 697 | 788 | 802 | 855 | 905 |
| Example 5 | 1.86 | 2.19 | 449 | 498 | 490 | 549 | 552 |
| Example 6 | 2.50 | 2.60 | 675 | 708 | 752 | 779 | 768 |
| Example 7 | 2.10 | 2.20 | 250 | 266 | 270 | 273 | 765 |
| Example 8 | 1.60 | 1.72 | 891 | 934 | 1,023 | 1,123 | 1,256 |
| Example 9 | 2.00 | 2.50 | 1159 | 1,262 | 1,301 | 1,343 | 1,388 |
| Comparative Example 1 | 1.88 | 2.11 | 676 | 956 | 1,340 | 1,795 | 1,956 |
| Comparative Example 2 | 1.97 | 2.27 | 404 | 458 | 460 | 463 | 458 |
| Comparative Example 3 | 1.87 | 2.22 | 946 | 1,280 | 1,540 | 1,889 | 2,035 |
| Comparative Example 4 | 1.88 | 2.13 | 722 | 945 | 1,258 | 1,497 | 1,759 |

Referring to Tables 1 and 2, in Examples using the amino-silicon-based dispersant and the hollow particles, stable time-dependent viscosity was provided while maintaining a low specific gravity of 3 g/cc or less, preferably 1.5 g/cc to 1.9 g/cc, and a thermal conductivity of 1.7 W/mK to 2.5 W/mK, preferably 1.9 W/mK to 2.5 W/mK.

In Examples 4 and 5 where the amount of amino-silicon-based dispersant was relatively low, viscosity stability was slightly lowered compared to those from other Examples.

In Example 6 where the surface-treated alumina particles were used, the specific gravity of the composition was slightly increased.

In Examples 7 and 8 where the content of the hollow particles was slightly reduced or increased, the balance of low specific gravity, viscosity stability and improved thermal conductivity was slightly degraded compared to those from other Examples.

In Comparative Examples 1 and 4 where a hydroxyl-silicon-based dispersant was used instead of the amino-silicon-based dispersant, viscosity stability was significantly reduced due to side reactions with surfaces of the thermally conductive inorganic particles.

In Comparative Example 2 where the hollow particles were omitted, the specific gravity of the composition was increased compared to that from Example 2 where the same thermally conductive inorganic particles were used, and exceeded 1.9

Referring to Example 9, the content of the siloxane-based resin was decreased as the content of the thermally conductive inorganic particles was increased. In Example 9, the specific gravity and the viscosity were increased relatively to those from other Examples.

## Claims

1. A gap filler composition, comprising:
a siloxane-based resin;
a filler comprising thermally conductive inorganic particles and hollow particles;
a catalyst; and
an amino-silicon-based dispersant.

2. The gap filler composition of claim 1, wherein a content of the amino-silicon-based dispersant is in a range from 0.1 wt% to 3 wt% based on a total weight of the composition.

3. The gap filler composition of claim 1, wherein the thermally conductive inorganic particles comprise aluminum hydroxide particles.

4. The gap filler composition of claim 3, wherein the aluminum hydroxide particles are not surface-treated with an alkyl group or an alkylsilane group.

5. The gap filler composition of claim 3, wherein a content of the thermally conductive inorganic particles is in a range from 75 wt% to 95 wt% based on a total weight of the composition.

6. The gap filler composition of claim 1, wherein the hollow particles comprise hollow silica particles.

7. The gap filler composition of claim 6, wherein a density of the hollow particles is in a range from 0.1 g/cc to 0.8 g/cc.

8. The gap filler composition of claim 1, wherein a content of the hollow particles is in a range from 0.1 wt% to 5 wt% based on a total weight of the composition.

9. The gap filler composition of claim 1, wherein the siloxane-based resin comprises a first siloxane-based resin that includes an unsaturated terminal group, and a second siloxane-based resin that includes a saturated terminal group.

10. The gap filler composition of claim 9, wherein the first siloxane-based resin comprises a siloxane-based resin having vinyl groups at both terminal ends, and the second siloxane-based resin comprises a siloxane-based resin having hydrogen atoms bonded to silicon atoms at both terminal ends.

11. The gap filler composition of claim 10, further comprising a cross-linking agent that includes a siloxane-based resin having methyl groups bonded to silicon atoms at both terminals ends.

12. The gap filler composition of claim 9, wherein a content of the siloxane-based resin is in a range from 2 wt% to 23 wt% based on a total weight of the composition.

13. The gap filler composition of claim 1, wherein the gap filler composition has a specific gravity of less than 3.

14. The gap filler composition of claim 1, wherein the gap filler composition has a specific gravity in a range from 1.5 to 1.9.

15. A battery pack, comprising
a plurality of battery modules; and
a support plate; and
a gap filler formed between the battery modules and the support plate using the gap filler composition of claim 1.
